# EUROPEAN PATENT SPECIFICATION

(11) **EP 1 199 125 B1**
(45) Date of publication and mention of the grant of the patent: **10.03.2004**
(21) Application number: 01122690.9
(22) Date of filing: 01.10.2001
(51) Int. Cl.: B23B 5/16, B23D 45/12, B26D 1/00, B26D 3/16

(54) **Cropper for elements developed mainly longitudinally**
Abschneidvorrichtung für im Wesentlichen längliche Elemente
Dispositif de découpage pour des éléments essentiellement allongés

(30) Priority: 03.10.2000 IT VI000220
(43) Date of publication of application: 24.04.2002
(73) Proprietor: Pedrazzoli Ibp spa, 36061 Bassano del Grappa (VI) (IT)
(72) Inventor: Accordini, Giancarlo, 36061 Bassano del Grappa (VI) (IT)
(74) Representative: Bonini, Ercole

(56) References cited:
- US-A- 3 316 789

## Description

The invention concerns a cropper for elements developed mainly longitudinally as for example pipes, structurals, bars and the like, provided with improvements of the means for the positioning of the elements to cut and for the unloading of the crop ends resulting from the elements parting.

Such a cropper is described for example in US-A-3 316 789.

It is known that in order to cut by measure elements developed mainly longitudinally as for example pipes, structurals, bars and the like, special cutting-off machines are used.

These ones include substantially a casing provided with a backing surface where the elements to be cut are placed one after another, with adjustment means to place the element to be cut at the wanted cut measure and with an operating head provided with a circular saw.

After the parting suitable motion means move the backing surface by opening a passage developing longitudinally as to the casing and allowing the unloading by gravity of the measure cut element inside an underlying container.

A specially provided deviating tile placed below the backing surface, allows to convey the measure cut pieces alternatively in a container placed in the front or in the back of the cropper.

The croppers of the described known type have however some drawbacks.

A first drawback is that when the backing surface is shifted to allow the unloading of the measure cut crop ends, these ones fall freely by gravity and hit quite strongly the crop ends previously unloaded and picked up in the underlying container.

This causes an increase of the noisiness in the environment and the possibility that the shock produces dents or marks on the elements compromising their use, especially if these elements are used to build furnishings as chairs, pieces of furniture, shelves and the like.

Another drawback is that that unloading of the measure cut crop ends through a gravity fall, cannot be suggested when the crop ends are considerably heavy and large-sized.

Another drawback is that that during the fall the cut crop ends pass through the cropper space below the saw where there are chips and coolant. They are therefore dirtied and require following cleaning operations.

Another drawback arises also when elements with a polygonal external outline are cut and during the fall they do not keep the position in which the bars they come from had been loaded, so they place themselves accidentally in the underlying container where they are picked up. In order to package to package them it is therefore necessary to put them previously in order. This implies an evident waste of time and consequent costs.

The present invention intends to overcome the said drawbacks.

It is a first object of the invention to realize a cropper provided with improvements in the unloading devices of the measure cut crop ends, in which it is drastically reduced the noisiness that the crop ends cause during the unloading.

It is another object that during the unloading the measure cut crop ends keep the same order and arrangement of the bars they come from.

It is another object that during the unloading the measure cut crop ends do not come into contact with chips and with coolant and therefore that they are kept clean.

It is another object to increase the unloading height of the cropper so as to use higher and therefore more capacious containers.

The said objects are reached through the realization of a cropper for elements developed mainly longitudinally including a casing defining a longitudinal axis substantially horizontal, said casing being joined to:
- an operating head with its circular saw;
- means for the positioning of said elements during the parting and for the unloading of the crop ends resulting from the parting of the elements, and being characterized in that said positioning and unloading means include a backing surface and a stopping surface both developing parallely as to the longitudinal axis of said casing and defining a dihedral angle in which, during the parting, are received one after another said elements to be cut, said stopping surface being mechanically connected with shifting means suitable to lower it as regards to the surface defined by said backing surface in order to allow a free unloading due to gravity of the crop ends resulting from the parting of said elements.

According to the preferred embodiment that will be described later on, the cropper includes an unloading surface placed in the casing front, aligned in front of the backing surface and coplanar to it, said unloading surface sloping downward to guide the crop ends in an underlying first container.

The shifting means are integral with the casing and include first leverages cooperating with the stopping surface to lower and to raise it.

In order to allow the unloading by fall of the crop ends without guiding them through the unloading surface, translation means are arranged to move the backing surface coplanarly to the unloading surface aligned to it.

Advantageously the cropper of the invention allows to improve the working conditions by reducing the noisiness of the environment where the cropper is installed.

Still advantageously the cropper of the invention produces an unfinished product of superior quality as regards to the one that is produced by the croppers of the known type.

The said objects and advantages will be better underlined during the description of a preferred embodiment of the invention that is given referring to the enclosed drawings where:
- fig.1 shows the cropper of the invention in an axonometric scrap view;
- fig. 2 shows a detail of the cropper of fig. 1 with the stopping surface in the raised position;
- fig. 3 shows the detail of fig. 2 with the stopping surface in the lowered position;
- fig. 4 shows a detail of fig. 3;
- fig. 5 shows a detail of the cropper shown in fig. 1 with the backing surface placed in the position in which it supports the element to be cut;
- fig. 6 shows the detail of fig. 5 with the backing surface placed in the position in which it allows the unloading of the cut crop end;
- fig. 7 shows the detail of the starting means for shifting the backing surface;
- fig. 8 shows a detail of the motion means of the stopping surface;
- fig. 9 shows a cross section of the cropper of the invention with the backing surface and the stopping surface placed in the operating position in which they support the element to be cut;
- fig. 10 shows the top view of a detail of the backing surface of fig. 9 with the respective motion means;
- fig. 11 shows the front view of a detail of the stopping surface of fig. 9 with the respective motion means;
- fig. 12 shows a side view of fig. 11;
- fig. 13 shows a cross section of the cropper of the invention in the unloading position;
- fig. 14 shows the front view of a detail of the stopping surface of fig. 13 with the respective motion means;
- fig. 15 shows the side view of fig. 14;
- fig. 16 shows the cross section of the cropper of the invention in another unloading position;
- fig. 17 shows the front view of a detail of the backing surface of fig. 16 with the respective motion means,
- fig. 18 shows the cropper of fig. 16 placed in a different position for the conveyance of the cut crop ends.

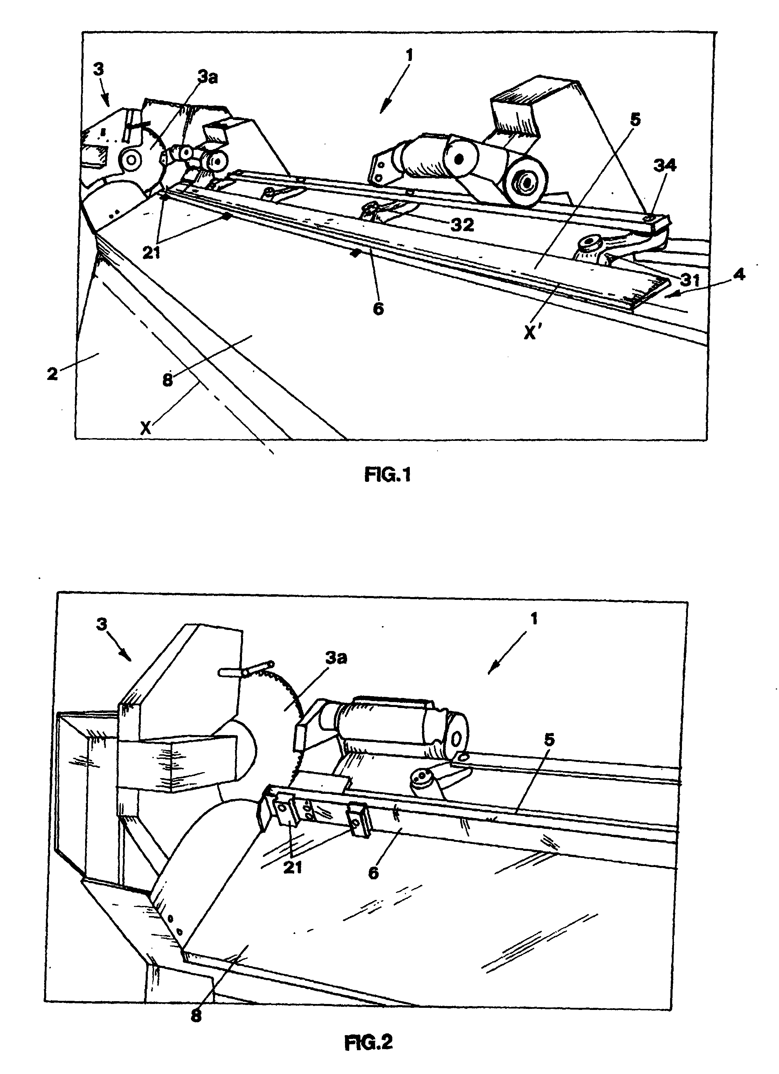

The cropper of the invention can be seen in axonometric scrap view in fig. 1, where it is marked with **1** as a whole.

It can be observed that it includes a casing **2** defining a longitudinal axis X substantially horizontal, said casing **2** being joined to an operating head **3** with its circular saw **3a** and means for the positioning of said elements during the parting and for the unloading of the crop ends resulting from the parting of the elements.

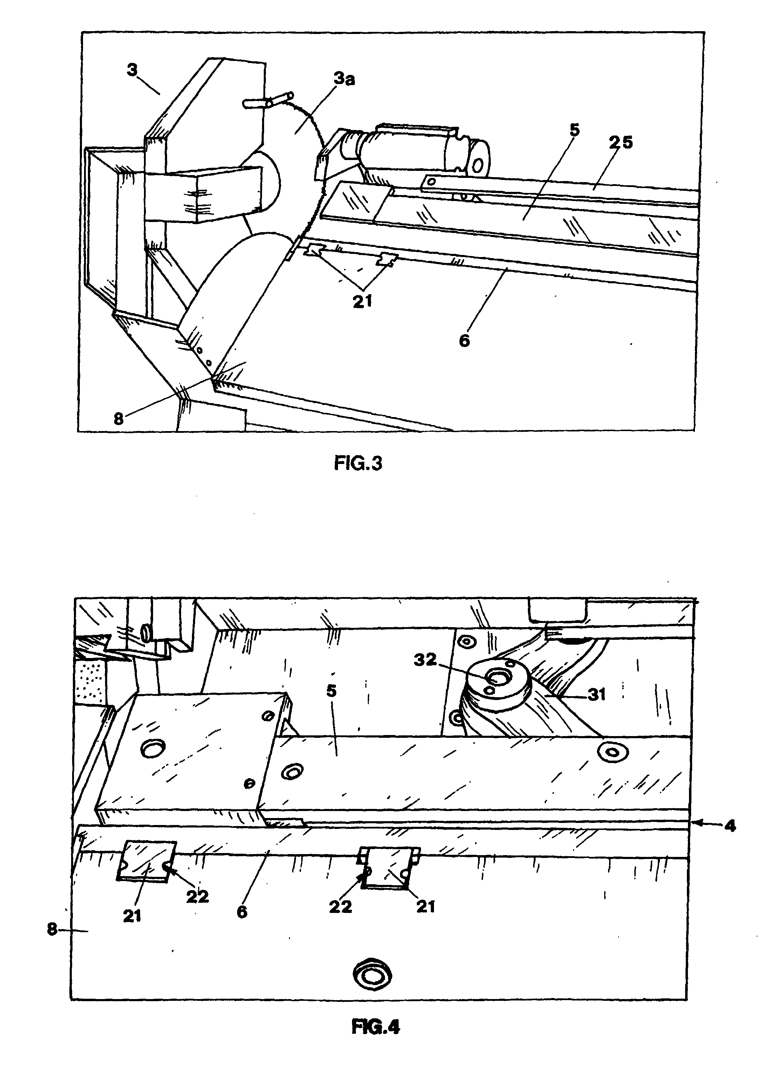

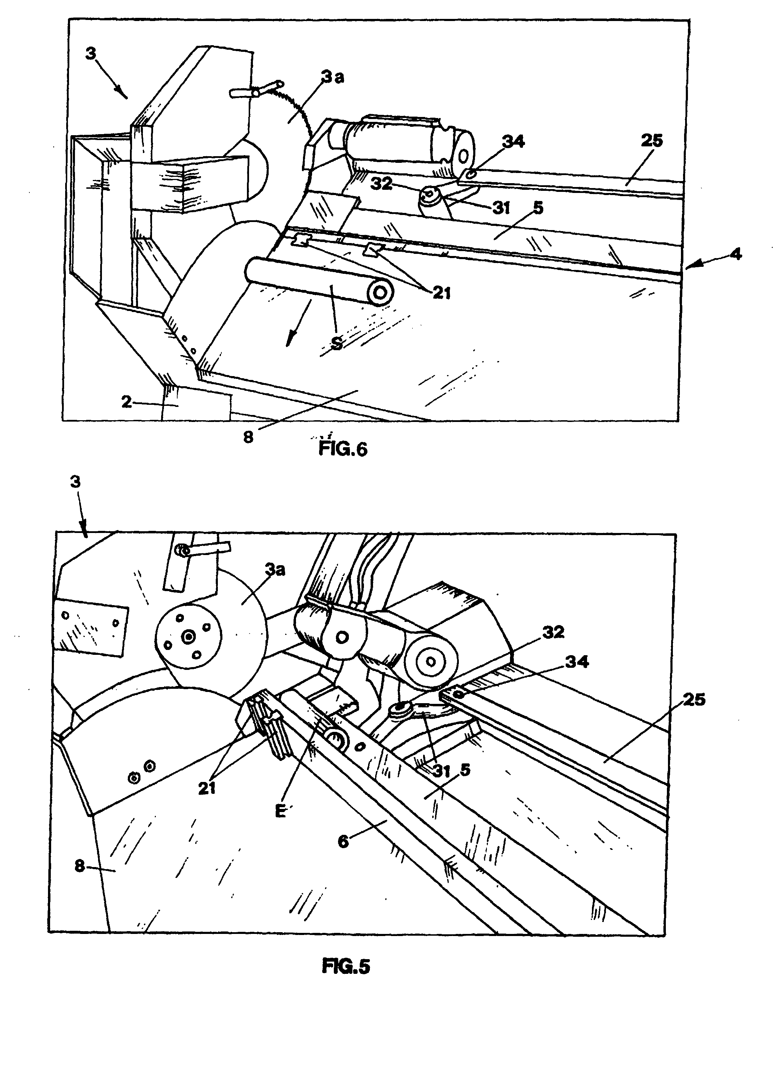

The above-said positioning and unloading means can be seen more in detail in the figg. 2 to 4 where they are marked with 4 as a whole.

According to the invention they include a backing surface **5** and a stopping surface **6** cooperating to define a dihedral angle **7** and developing along a direction X' substantially parallel to the longitudinal axis X of the above-said casing **2**.

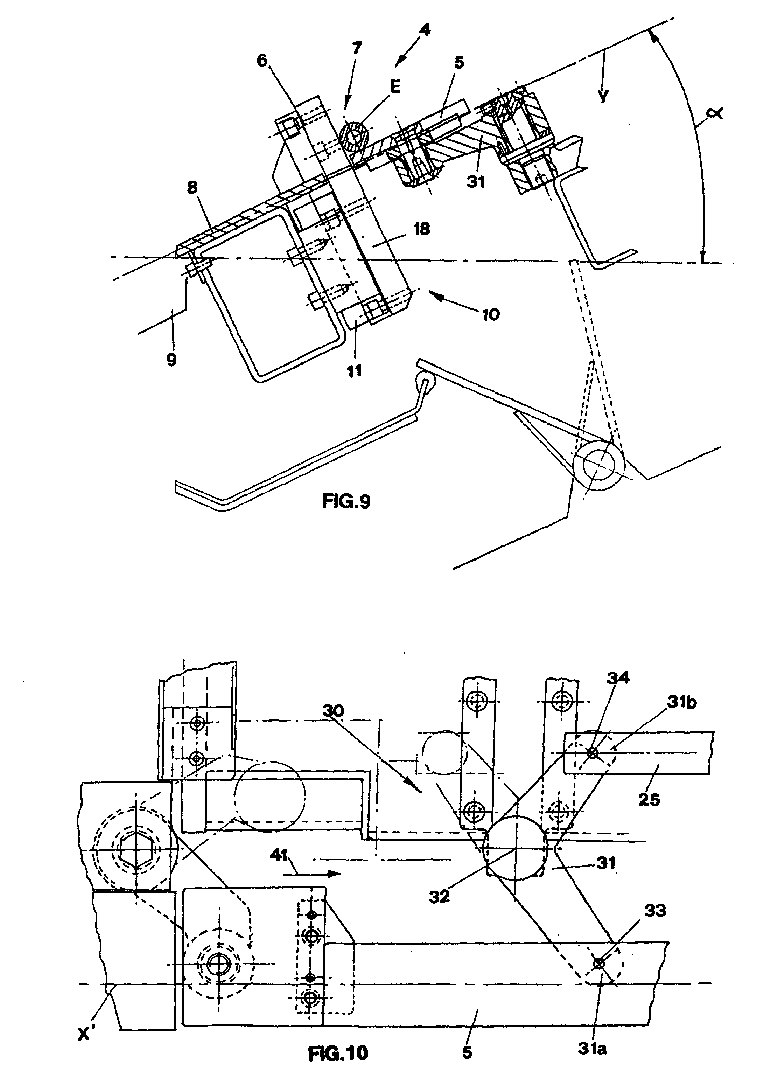

The above-said backing **5**, the stopping surface **6** and the dihedral angle **7** defined between them, can be seen in detail in fig. 9 together with the longitudinal element E to be cut placed in the parting position.

The cropper includes also an unloading surface **8** shown in all the figures 1 to 7 and particularly also in fig. 9, said unloading surface **8** being placed in the front of the casing **2** and aligned in front of the backing surface **5** and coplanar to it.

The unloading surface **8** and the backing surface **5** define therefore a plane surface marked with Y sloping downward of an angle α as to the horizontal line in order to convey the crop ends resulting from the cropper of the element E, inside an underlying first container **9**.

The stopping surface **6**, as it can be observed, is included between the unloading surface **8** and the backing surface **5** and is connected to shifting means, marked with **10** as a whole, suitable to lower and raise it as to the surface Y defined by the backing surface **5** and by the unloading surface **8**.

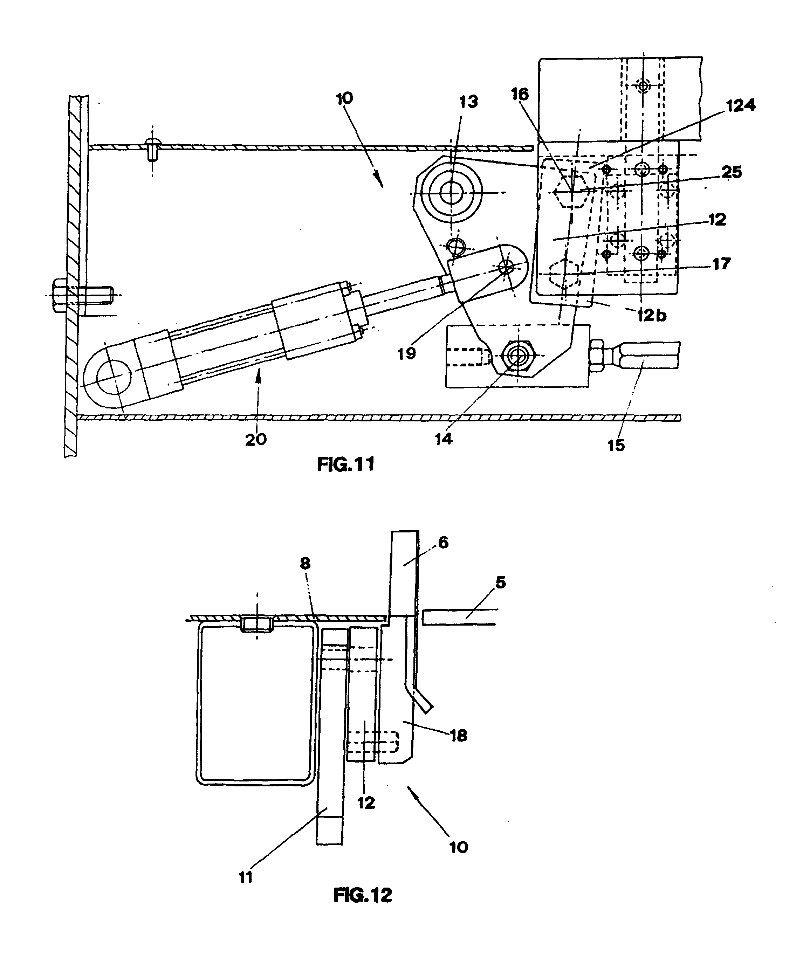

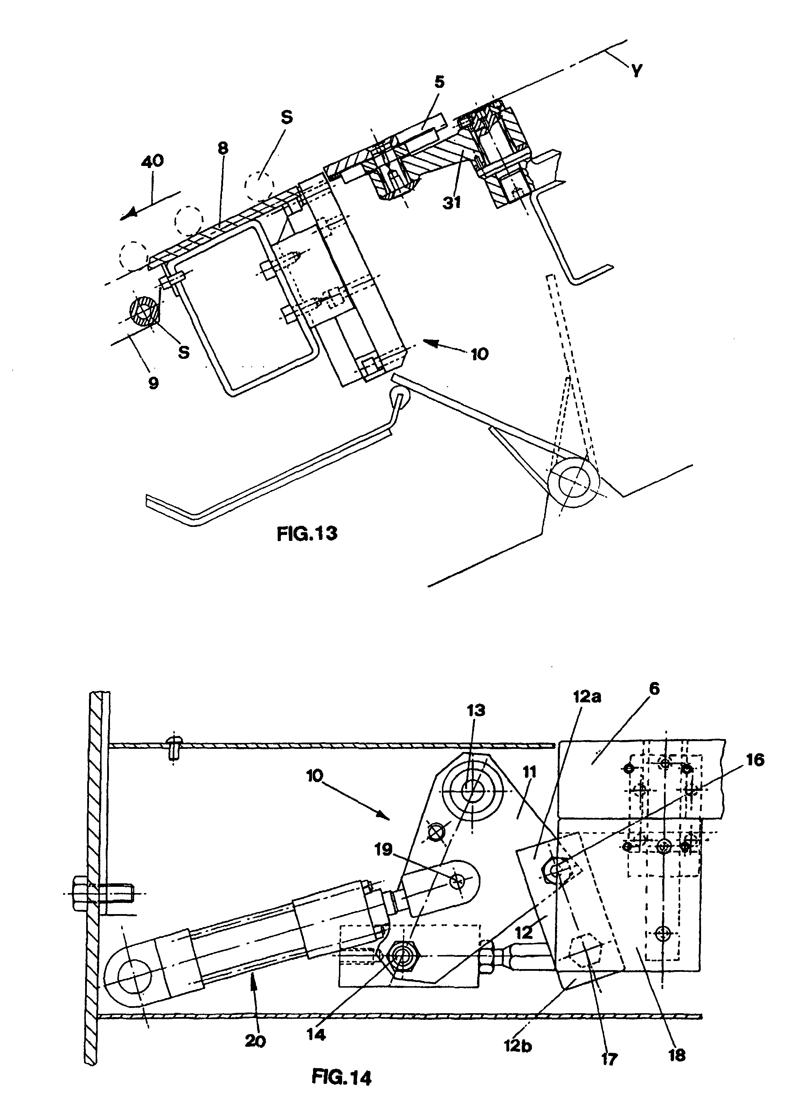

More particularly the shifting means **10** that can be observed more in detail in figg. 11 and 12, include a plurality of shaped plates **11** aligned along the direction X', integral with the casing **2** and connected with the stopping surface **6** each one through a connecting rod **12.**

More in detail each shaped plate **11** has a first pin **13** connecting it in a revolving way to the casing **2**, a second pin **14** connecting it in a revolving way with a tie rod **15** placed parallely to the stopping surface **6** and connected with all the other shaped plates **11** and a second pinbconnecting it in a revolving way to a first end **12a** of the above-said connecting rod **12.**

A fourth pin **17** connects the second end **12b** of the connecting rod **12** with a bracket **18** of the stopping surface **6.**

Each shaped plate **11** has also a fifth pin **19** connecting it in a revolving way to the end of first starting means consisting of a fluid jack **20** integral with the casing **2**.

It must be precised that just one of said plates **11** is connected with the jack **20**. In fact, since all the plates are connected through the tie rod **1**5, just one of them is needed to be rotated around the first pin **13** so that all the others follow it stiffly in the rotation.

The vertical movement of the stopping surface **6** is guided by a sliding block **21** belonging to the bracket **18,** said sliding block **21** being coupled in a sliding way in a guide **22** fixed to the casing **2.**

Preferably the sliding block **21** and the guide **22** are of the ball blow-by type.

As to the backing surface **5**, it can be observed in fig. 9 and also in the detail of fig. 10, that it is connected with translation means, marked with **30** as a whole, which include a plurality of connecting rods **31** each one having a central pin **32** connected in a revolving way with the casing **2.**

Each connecting rod **31** has also a first end **31a** with a first pin **33** connecting it in a revolving way to the backing surface **5** and a second end **31b** with a second pin **34** connecting it in a revolving way with a tie rod **25.**

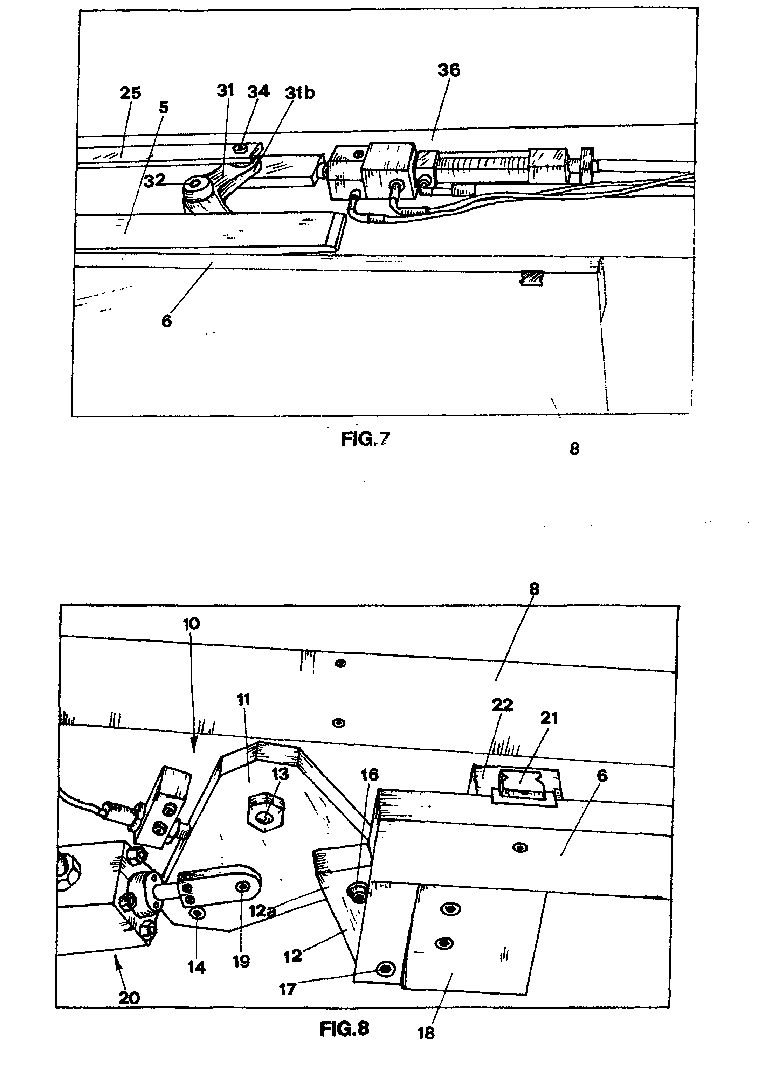

The said tie rod **25,** as it can be observed particularly in fig 1, connects all the connecting rods **31** to each other and, as it can be observed in fig. 7, it has at the end second starting means consisting in a fluid jack 36.

The jack **36** is of the differentiated stroke type allowing the shifting according to different amounts of the backing surface **5** along the direction parallel to the longitudinal axis X'.

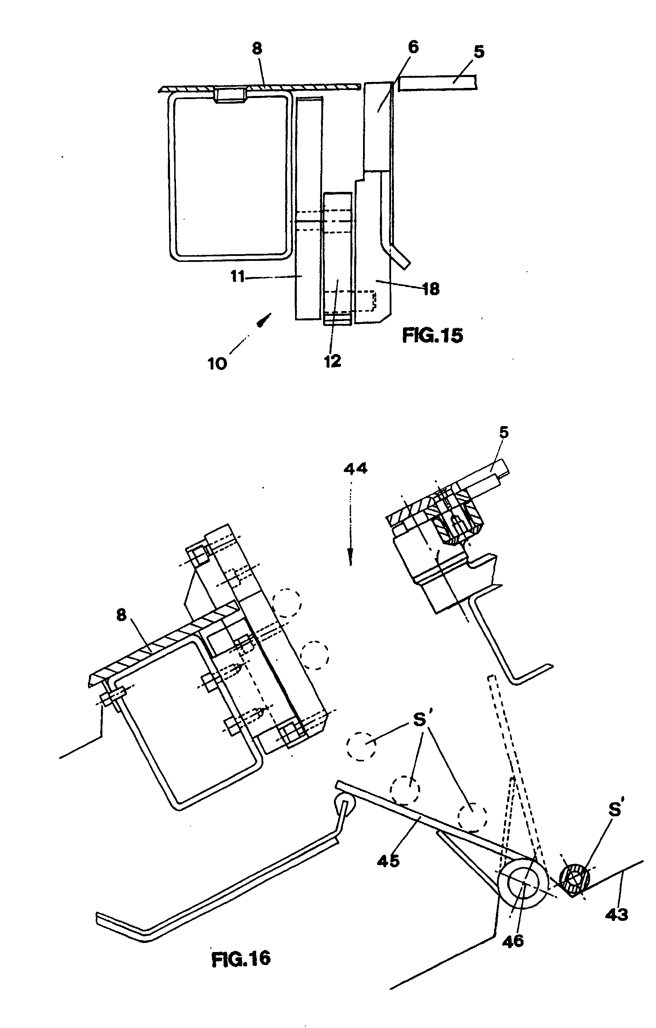

Practically after the cropper of the element E in which the cropper is placed, in the pattern shown in fig. 9, by operating the shifting means **10,** the stopping surface **6** is lowered below the backing surface 5 and the unloading surface **8** and places itself in the pattern shown in the figures 13 to 15.

The measure cut crop ends S roll along the unloading surface **8** according to the direction marked by the arrow **40,** as long as they are placed inside the first container **9**.

It can be observed that the crop end S is guided in the container **9** avoiding any shock against the underlying crop ends previously unloaded.

The noisiness and the possibility that the crop ends damage reciprocally is reduced.

It can be observed that the container **9** can be placed practically at the same height of the unloading surface **8** and this allows, as to the croppers of the known technics, to use higher containers, having therefore a larger accumulation capacity.

Moreover it can be observed that during the fall the crop end S does not pass through the lower part of the casing **2** in which the chips and the cutting oil are unloaded and therefore it is kept clean and does not require any cleaning before the packaging and the consignment.

Finally when the cut crop end S slides along the unloading surface **8**, it keeps the same orientation of the longitudinal element it comes from and therefore all the crop ends that are accumulated in the container **9** are kept in order and it is not necessary to rearrange them before packaging them. This is particularly interesting when longitudinal elements with an irregular polygonal cross section are cut.

It is advisable to precise that when the stopping surface **6** is lowered, before it takes its place below the unloading surface **8** and the backing surface **5**, it undergoes a slight shift marked by the arrow **41** shown in fig. 10 due to the intervention of the jack **36**. In fact the lowering of the stopping surface **6** below the backing surface **5** and the unloading surface **8**, happens when the saw **3a** is still lowered. It is therefore necessary to shift the backing surface **5** with the respective crop end S in the direction marked by the arrow **41** previously seen, in order to avoid the crawling against the saw **3a** during the loading.

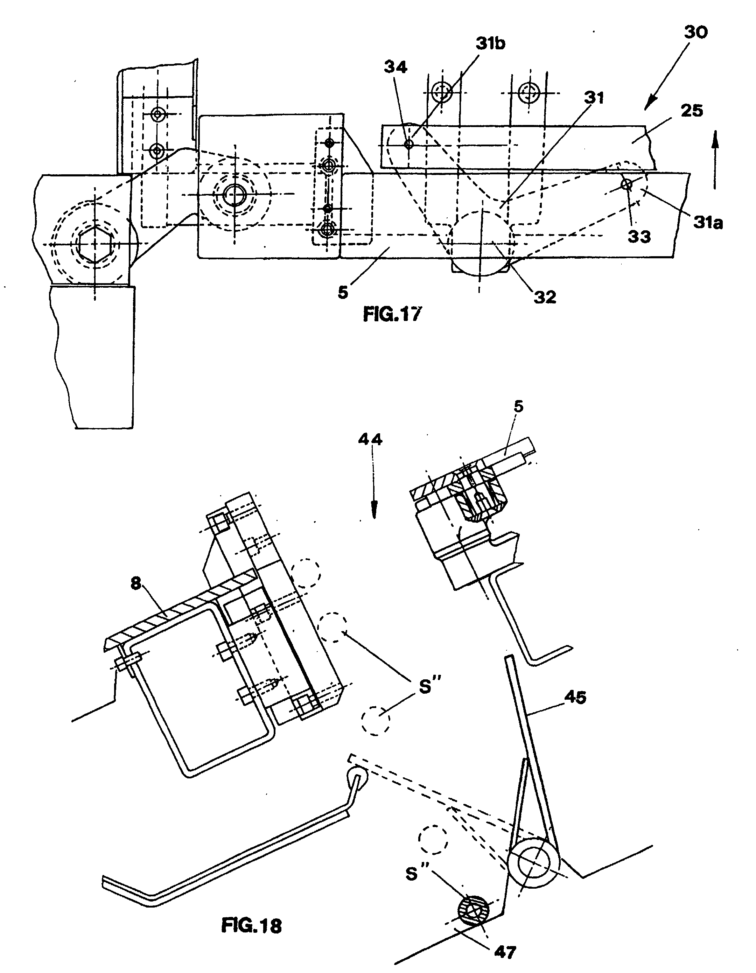

Any possible oversized bar or crop ends that it could be wanted to throw away, are unloaded by gravity in an underlying second container **43**, which can be seen in fig. 16. This is obtained through the intervention of the translation means **30** that pull back the backing surface 5 from the position shown in fig. 9 to the position shown in fig. 16 and 17. In such a way the crop ends S' fall by gravity thorough an opening **44,** which is opened in the casing **2,** and are conveyed in the second container **43** by a deviating tile **45** connected in a revolving way with a pin **46** integral with the casing **2**.

If it is wanted to unload the measure cut crop ends S" in a third container **57** placed below the backing surface **5** as it happens in the known technics, it will be needed just to intervene again on the translation means **30** by placing again the backing surface **5** according to the pattern of figg. 16 and 17 and at the same time by placing the deviating tile **45** in the position shown in fig. 18.

According to what has been said it can be understood that the cropper of the invention attains all the prearranged object.

In the executive phase it will be possible to change the shape of the backing surface **5** and of the stopping surface **6** as well as the shape of the respective shifting and translation means.

## Claims

1. Cropper (1) for elements (E) developed mainly longitudinally including a casing (2) defining a longitudinal axis (X) substantially horizontal, said casing (2) being joined to:
- an operating head (3) with its circular saw;
- means for the positioning of said elements during the parting and for the unloading of the crop ends resulting from the parting of the elements (4), **characterized in that** said positioning and unloading means (4) include a backing surface (5) and a stopping surface (6) both developing parallely as to the longitudinal axis (X) of said casing and defining a dihedral angle (7) in which, during the parting, are received one after another said elements to be cut (E), said stopping surface (6) being mechanically connected with shifting means (10) suitable to lower it as regards to the surface (Y) defined by said backing surface (5), in order to allow a free unloading due to gravity of the crop ends (S) resulting from the parting of said elements (E).

2. Cropper (1) according to claim 1) **characterized in that** it includes an unloading surface (8) placed in the front of said casing (2), aligned in front of said backing surface (5) and coplanar to it, said unloading surface (8) sloping downward to guide said crop ends (S) in an underlying first container (9).

3. Cropper (1) according to claim 2) **characterized in that** said unloading surface (8) is fixed to said casing (2).

4. Cropper (1) according to claim 2) **characterized in that** said stopping surface (6) is included between said backing surface (5) and said unloading surface (8).

5. Cropper (1) according to claim 2) **characterized in that** said stopping surface (6) is placed substantially orthogonally to said backing surface (5) and to said unloading surface (8).

6. Cropper (1) according to claim 1) **characterized in that** said shifting means (10) include one or more shaped plates (11) each one having a first pin (13) connecting it in a revolving way with said casing (2), a second pin (14) connecting it in a revolving way with a tie rod (15) placed parallely to said stopping surface (6) and a third pin (16) linking it in a revolving way with a first end (12a) of a connecting rod (12), having a second end (12b) provided with a fourth pin (17) connecting it with a bracket (18) belonging to said stopping surface (6).

7. Cropper (1) according to claim 6) **characterized in that** said shaped plate (11) includes also a fifth pin (19) connecting it in a revolving way with the end of first starting means (20).

8. Cropper (1) according to claim 1) **characterized in that** it is provided with translation means (30) of said backing surface (5) including a plurality of connecting rods (31) each one having a central pin (32) connecting it in a revolving way with said casing (2), a first pin (33) connecting its first end (31a) in a revolving way with said backing surface (5) and a second pin (34) connecting its second end (31b) in a revolving way with a tie rod (25) which is supported in a sliding way with said casing (2) and has one of its ends fixed to second starting means. (36).

9. Cropper (1) according to claim 7) **characterized in that** said first starting means consist of a fluid jack (20).

10. Cropper (1) according to claim 8) **characterized in that** said second starting means consist of a fluid jack (36) of the differentiated stroke type.

11. Cropper (1) according to claim 6) **characterized in that** said bracket (18) is provided with a sliding block (21) coupled in a sliding way to a guide fixed to said casing (2).

12. Cropper (1) according to claim 6) **characterized in that** said first pin (13), said second pin (14) and said third pin (16), are placed at the vertexes of a triangle.

## Patentansprüche

1. Schneidvorrichtung (1) für Elemente (E), von im Wesentlichen länglicher Form, ein Gehäuse (2) umfassend, das eine längliche, im Wesentlichen waagerechte Achse (X) definiert, wobei das Gehäuse (2) verbunden ist mit:
- einem Arbeitskopf (3) mit seiner Kreissäge;
- Mitteln zur Positionierung der Elemente während der Trennung sowie für die Entladung der aus der Trennung der Elemente resultierenden, geschnittenen Enden (4), **dadurch gekennzeichnet, dass** die Positionier- und Entlademittel (4) eine Verstärkungsfläche (5) und eine Anschlagfläche (6) umfassen, welche beide parallel zur Längsachse (X) des Gehäuses verlaufen und einen zweiflächigen Winkel (7) definieren, in dem die zu schneidenden Elemente (E) während der Trennung eines nach dem anderen aufgenommen werden, wobei die Anschlagfläche (6) mechanisch verbunden ist mit Verschiebemitteln (10), die geeignet sind, sie bezüglich der Fläche (Y), die durch die Verstärkungsfläche (5) definiert wird, abzusenken, um ein freies Entladen der aus der Trennung der Elemente (E) resultierenden, geschnittenen Enden (S), durch Schwerkraft zu erlauben.

2. Schneidvorrichtung (1) gemäß Patentanspruch 1), **dadurch gekennzeichnet, dass** sie eine Entladefläche (8) umfasst, die sich vor dem Gehäuse (2) befindet, ausgerichtet vor der Verstärkungsfläche (5) und koplanar zu dieser, wobei die Entladefläche (8) schräg abfällt, um die geschnittenen Enden (S) in einen darunter befindlichen, ersten Behälter (9) zu leiten.

3. Schneidvorrichtung (1) gemäß Patentanspruch 2), **dadurch gekennzeichnet, dass** die Entladefläche (8) am Gehäuse (2) befestigt ist.

4. Schneidvorrichtung (1) gemäß Patentanspruch 2), **dadurch gekennzeichnet, dass** die Anschlagfläche (6) zwischen der Verstärkungsfläche (5) und der Entladefläche (8) enthalten ist.

5. Schneidvorrichtung (1) gemäß Patentanspruch 2), **dadurch gekennzeichnet, dass** die Anschlagfläche (6) im Wesentlichen orthogonal zur Verstärkungsfläche (5) und zur Entladefläche (8) positioniert ist.

6. Schneidvorrichtung (1) gemäß Patentanspruch 1), **dadurch gekennzeichnet, dass** die Verschiebemittel (10) eine oder mehrere geformte Platten (11) umfassen, von denen eine jede einen ersten Zapfen (13) aufweist, der sie drehend mit dem Gehäuse (2) verbindet, einen zweiten Zapfen (14), der sie drehend mit einer Zugstange (15) verbindet, die parallel zur Anschlagfläche (6) positioniert ist und einen dritten Zapfen (16), der sie drehend mit einem ersten Ende (12a) einer Verbindungsstange (12) verbindet, welche ein zweites Ende (12b) aufweist mit einem vierten Zapfen (17) zur Verbindung mit einem Träger (18), der zur Anschlagfläche (6) gehört.

7. Schneidvorrichtung (1) gemäß Patentanspruch 6), **dadurch gekennzeichnet, dass** die geformte Platte (11) ebenfalls einen fünften Zapfen (19) aufweist, der sie drehend mit dem Ende erster Anlassmittel (20) verbindet.

8. Schneidvorrichtung (1) gemäß Patentanspruch 1), **dadurch gekennzeichnet, dass** sie mit Übertragungsmitteln (30) der Verstärkungsfläche (5) versehen ist, welche eine Vielzahl von Verbindungsstangen (31) umfassen, von denen jede einen mittleren Zapfen (32) aufweist, der sie drehend mit dem Gehäuse (2) verbindet, einen ersten Zapfen, der ihr erstes Ende (31a) drehend mit der Verstärkungsfläche (5) verbindet und einen zweiten Zapfen (34) der ihr zweites Ende (31b) drehend mit einer Zugstange (25) verbindet, welche mit dem Gehäuse (2) gleitend gehalten wird und an einem Ende an zweiten Anlassmitteln (36) befestigt ist.

9. Schneidvorrichtung (1) gemäß Patentanspruch 7), **dadurch gekennzeichnet, dass** die ersten Anlassmittel aus einer Fluid-Winde (20) bestehen.

10. Schneidvorrichtung (1) gemäß Patentanspruch 8), **dadurch gekennzeichnet, dass** die zweiten Anlassmittel aus einer Fluid-Winde (36) mit Hubverstellung bestehen.

11. Schneidvorrichtung (1) gemäß Patentanspruch 6), **dadurch gekennzeichnet, dass** der Träger (18) einen gleitenden Block (21) umfasst, der gleitend mit einer Führung gekuppelt ist, welche am Gehäuse (2) befestigt ist.

12. Schneidvorrichtung (1) gemäß Patentanspruch 6), **dadurch gekennzeichnet, dass** der erste Zapfen (13), der zweite Zapfen (14) und der dritte Zapfen (16) an den Gipfeln eines Dreiecks positioniert sind.

## Revendications

1. Tronçonneuse (1) pour éléments (E) à développement principalement longitudinal comprenant un boîtier (2) définissant un axe longitudinal (X) essentiellement horizontal, ledit boîtier (2) étant relié à:
- une tête d'actionnement (3) avec une scie circulaire;
- des moyens pour le positionnement dedits éléments durant la séparation et pour le déchargement des bouts chutés résultant de la séparation des éléments (4), **caractérisée en ce que** lesdits moyens de positionnement et de déchargement (4) comprennent une surface de soutien (5) et une surface d'arrêt (6) les deux se développant parallèlement par rapport à l'axe longitudinal (X) dudit boîtier et définissant un angle dièdre (7) où, durant la séparation, lesdits éléments devant être coupés (E) sont reçus l'un après l'autre, ladite surface d'arrêt (6) étant mécaniquement reliée avec des moyens de déplacement (10) indiqués pour l'abaisser par rapport à la surface (Y) définie par ladite surface de soutien (5), afin de permettre un déchargement libre dû à la gravité des bouts chutés (S) résultant de la séparation desdits éléments (E).

2. Tronçonneuse (1) selon la revendication 1) **caractérisée en ce qu**'elle comprend une surface de déchargement (8) positionnée en face dudit boîtier (2), alignée devant ladite surface de soutien (5) et coplanaire par rapport à celle-ci, ladite surface de déchargement (8) inclinée vers le bas pour guider lesdits bouts chutés (S) dans un premier conteneur (9) se trouvant au-dessous.

3. Tronçonneuse (1) selon la revendication 2) **caractérisée en ce que** ladite surface de déchargement (8) est fixée audit boîtier (2).

4. Tronçonneuse (1) selon la revendication 2) **caractérisée en ce que** ladite surface d'arrêt (6) est comprise entre ladite surface de soutien (5) et ladite surface de déchargement (8).

5. Tronçonneuse (1) selon la revendication 2) **caractérisée en ce que** ladite surface d'arrêt (6) est positionnée d'une manière essentiellement orthogonale par rapport à ladite surface de soutien (5) et à ladite surface de déchargement (8).

6. Tronçonneuse (1) selon la revendication 1) **caractérisée en ce que** lesdits moyens de déplacement (10) comprennent une ou plusieurs plaques profilées (11) chacune ayant un premier goujon (13) en la reliant d'une manière pivotante audit boîtier (2), un deuxième goujon (14) en la reliant d'une manière pivotante à un tirant (15) positionné parallèlement par rapport à ladite surface d'arrêt (6) et un troisième goujon (16) en la reliant d'une manière pivotante à une première extrémité (12a) d'une tige de raccordement (12) ayant une deuxième extrémité (12b) munie d'un quatrième goujon (17) en la reliant à un support (18) appartenant à ladite surface d'arrêt (6).

7. Tronçonneuse (1) selon la revendication 6) **caractérisée en ce que** ladite plaque profilée (11) comprend également un cinquième goujon (19) en la reliant d'une manière pivotante à l'extrémité de premiers moyens de démarrage (20).

8. Tronçonneuse (1) selon la revendication 1) **caractérisée en ce qu**'elle est équipée de moyens de translation (30) de ladite surface de soutien (5) comprenant une pluralité de tiges de raccordement (31) chacune ayant un goujon central (32) en la reliant d'une manière pivotante audit boîtier (2), un premier goujon (33) reliant sa première extrémité (31a) d'une manière pivotante à ladite surface de soutien (5) et un deuxième goujon (34) reliant sa deuxième extrémité (31b) d'une manière pivotante à un tirant (25) qui s'unit d'une manière coulissante avec ledit boîtier (2) et a une de ses extrémités fixée à de deuxièmes moyens de démarrage (36).

9. Tronçonneuse (1) selon la revendication 7) **caractérisée en ce que** lesdits premiers moyens de démarrage se composent d'un vérin de levage à fluide (20).

10. Tronçonneuse (1) selon la revendication 8) **caractérisée en ce que** lesdits deuxièmes moyens de démarrage se composent d'un vérin de levage à fluide (36) du type à course differentiée.

11. Tronçonneuse (1) selon la revendication 6) **caractérisée en ce que** ledit support (18) est équipé d'un bloc coulissant (21) relié d'une manière coulissante à un guidage fixé audit boîtier (2).

12. Tronçonneuse (1) selon la revendication 6) **caractérisée en ce que** ledit premier goujon (13), ledit deuxième goujon (14) et ledit troisième goujon (16) sont positionnés aux sommets d'un triangle.
